# EUROPEAN PATENT SPECIFICATION

(11) **EP 2 552 151 B1**
(45) Date of publication and mention of the grant of the patent: **28.08.2019**
(21) Application number: 11175957.7
(22) Date of filing: 29.07.2011
(51) Int. Cl.: H04W 40/36, H04W 28/22, H04W 40/24

(54) **METHOD AND SYSTEM FOR CENTRALIZED CONTROL OF MOBILE STATION ASSOCIATIONS, ROUTING AND RATE CONTROL IN WIRELESS NETWORKS**
VERFAHREN UND SYSTEM ZUR ZENTRALISIERTEN STEUERUNG VON MOBILSTATIONSVERBINDUNGEN, ROUTING- UND RATENSTEUERUNG IN DRAHTLOSEN NETZWERKEN
PROCÉDÉ ET SYSTÈME DE CONTRÔLE CENTRALISÉ D'ASSOCIATIONS DE STATION MOBILE, ROUTAGE ET CONTRÔLE DE DÉBIT DANS LES RÉSEAUX SANS FIL

(43) Date of publication of application: 30.01.2013
(73) Proprietor: Deutsche Telekom AG, 53113 Bonn (DE)
(72) Inventor: Dely, Peter, 65363 Karlstadt (SE); Kassler, Andreas, 65635 Karlstadt (SE); Sivchenko, Dimitry, 64285 Darmstadt (DE); Einsiedler, Hans-Joachim, 13189 Berlin (DE); Bayer, Nico, 61231 Bad Nauheim (DE)
(74) Representative: Vossius & Partner Patentanwälte Rechtsanwälte mbB

(56) References cited:
- WO-A1-2004/004227
- WO-A1-2009/029157
- US-A1- 2008 316 982
- US-A1- 2009 116 389
- US-B1- 7 573 857
- LIN LUO ET AL: "Joint Association, Routing and Bandwidth Allocation for Wireless Mesh Networks", GLOBAL TELECOMMUNICATIONS CONFERENCE, 2008. IEEE GLOBECOM 2008. IEEE, IEEE, PISCATAWAY, NJ, USA, 30 November 2008 (2008-11-30), pages 1-6, XP031369805, ISBN: 978-1-4244-2324-8

## Description

The present invention relates to a method and system for centralized control of mobile station(s) association(s) in a wireless network. In particular, the method and system controls associations of user's mobile stations to access points in a wireless network, preferably in a wireless mesh network. The method and system of the present invention also comprise a centralized controlled routing of data from associated mobile stations through the wireless network. Embodiments also relate to a centralized controlled method and system for assigning rates how fast data from associated mobile stations will be transported through the wireless network.

### BACKGROUND OF THE INVENTION

In many Wireless Local Area Network (WLAN) deployments a mobile station (STA) can choose from a multitude of Access Points (APs) to associate to. Most operating systems hide the decision which AP to use from the user. Instead, if several APs of a desired operator (identified by its Service Set Identifier) are in reach, the WLAN driver chooses an AP based on a quality metric. Mostly, the AP with the best signal strength is used. Using the AP with the highest signal strength is often a wise choice, in particular if users are evenly distributed over the network. However, if users are clustered around some APs, those APs might be required to serve a very high load, while close-by APs might still be underutilized. This insight has for example been exploited in the articles P. Bahl, M. Hajiaghayi, K. Jain, and S. Mirrokni, "Cell breathing in wireless lans: Algorithms and evaluation," IEEE Transactions on, vol. 6, Feb. 2007, pp. 164-178; K. Sundaresan and K. Papagiannaki, "The need for cross-layer information in access point selection algorithms," Proceedings of the 6th ACM SIGCOMM on Internet measurement - IMC '06, New York, New York, USA: ACM Press, 2006, p. 257 and L. Luo, D. Raychaudhuri, H. Liu, and M. Wu, "Joint Association, Routing and Bandwidth Allocation for Wireless Mesh Networks," IEEE GLOBECOM 2008, 2008. Instead of using a quality metric, these three articles suggest using load aware metrics for AP selection.

IEEE 802.11r provides mechanisms for fast handover of a STA from one AP to another, but does not mandate any specific mechanism for finding the best possible associations or to control the routing of data in the wired distribution network.

The deployment of WLAN APs is costly, since each WLAN AP needs power and wired network connection. To save costs, Wireless Mesh Networks (WMNs) can serve as a backbone for WLAN APs. In a WMN, mesh routers wirelessly relay traffic on behalf of mesh access points (MAP) or other mesh routers. Only a subset of the mesh routers, the mesh gateways, are connected to a wired distribution network. An STA can connect to MAPs as they were normal APs. In this kind of setting, the AP selection problem is more complicated than in the standard AP case. Typically, WMNs provide lower capacities than wired networks, but can also provide more possibilities to route the traffic to the Internet.

Document US 2008/0316982 A1 discloses techniques for enhancing the throughput capacity available to client devices connected to a wireless local area network. To leverage a dense access point infrastructure, central management techniques are employed.

It is therefore an object of the present invention to provide a method and system in order to overcome the above mentioned shortcomings of the prior art. In particular, it is an object of the present invention to provide a system and method for association of mobile stations to a wireless multi-hop network, and for routing data from associated mobile stations through the wireless network. Embodiments comprise assigning data transmission rates from associated mobile stations through the wireless network.

The objects of the invention are achieved by the features of the independent claims. Further preferred embodiments of the invention are defined by the dependent claims.

### SUMMARY OF THE INVENTION

The invention is defined by independent claims 1 and 10.

In the following, parts of the description and drawings referring to embodiments which are not covered by the claims are not presented as embodiments of the invention, but as examples useful for understanding the invention.

The present invention provides a method for cetralized controlled association of a mobile station to a wireless access point in a wireless multi-hop network as specified in independent claim 1.

The present invention also refers to a system for centralized controlled association of a mobile station (STA) to a wireless access point (AP) in a wireless multi-hop network as defined by independent claim 10.

### BRIEF DESCRIPTION OF THE DRAWINGS

Various features of the embodiments can be more fully appreciated, as the same become better understood with reference to the following detailed description of the embodiments when considered in connection with the accompanying figures, in which:
- Fig. 1: shows an overall network structure with STAs, WMNs and a wired distributed network.
- Fig. 2: shows an embodiment of a mesh router architecture according to the present invention.
- Fig. 3: shows a core network architecture according to the present invention.
- Fig. 4: shows a general architecture of a user station STA according to the present invention.
- Fig. 5: shows the connectivity of a plurality of APs to MAPs based on an optimization algorithm according to the present invention.

### DETAILED DESCRIPTION OF EMBODIMENTS

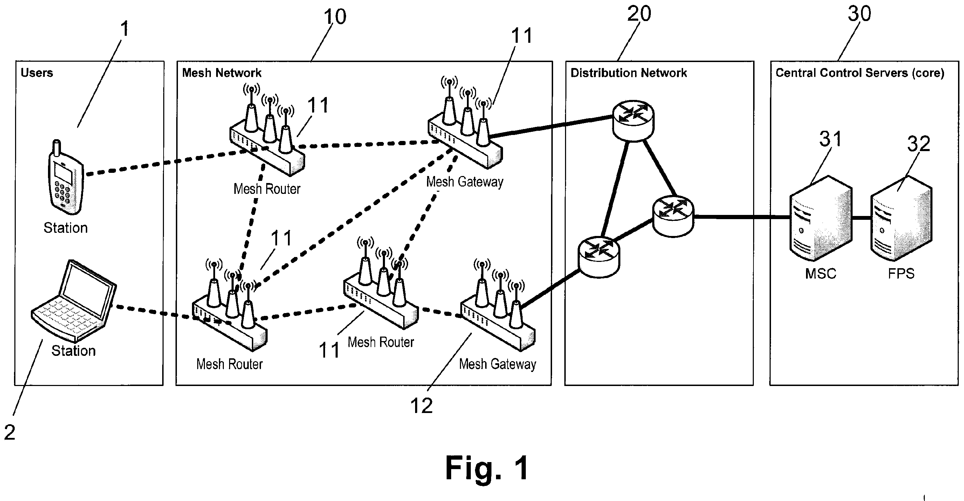

Figure 1 shows an overall architecture of a typical mesh network with mobile stations 1 and 2 connected the to the mesh network 10. A mobile station STA may be any mobile device which is adapted to connect to a WLAN. For instance, Figure 1 shows the two examples of a mobile phone (cellular phone) 1 and a laptop (notbook) 2 for STAs. The STAs are connected wirelessly to the mesh network 10 which comprises at least one, preferably a plurality of mesh routers 11 which are connected wirelessly to other mesh routers 11 or mesh gateways 12. Preferably, a mesh router node is an access point which provides only wireless connection to at least another mesh router node or to a mesh gateway 12. It is preferred that mesh router node comprises no wired connection or uses no wired connection for routing data within the mesh network. Each mesh router node 11 is preferably equipped with one or multiple physical wireless cards. Mesh gateways 12 in addition have an interface to a wired distribution network 20. The wired distribution network is wired connected to a core network 30 which comprises, for example, a Monitoring and Control Server (MCS) 31 and/or a Flow Processing Server (FPS) 32.

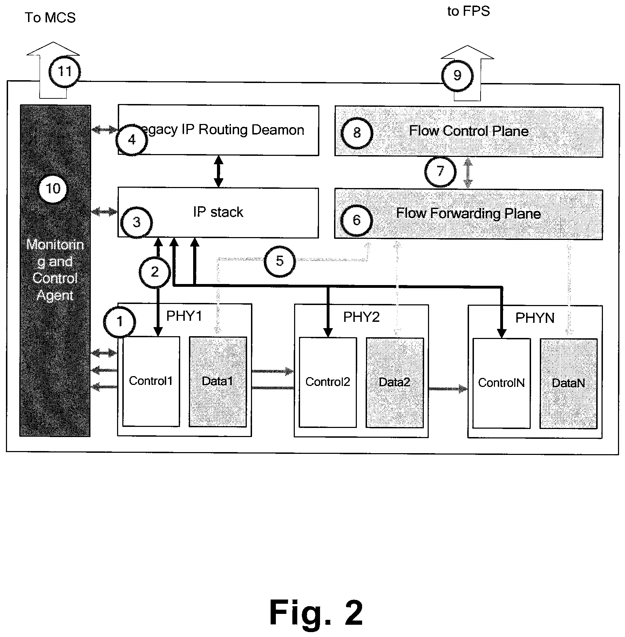

Figure 2 shows a preferred embodiment of a mesh router architecture in accordance with the present invention in more detail. Each physical wireless interface PHY1, PHY2, ..., PHYN is preferably split in at least two virtual interfaces (see (1) in Fig. 2). One virtual interface (Control 1, Control 2, ... , Control N) is used for control traffic and another virtual interface (Data1, Data2, ..., DataN) is used for data traffic. If the IEEE 802.11 MAC layer is used, the virtualization may be achieved by the use of different Service Set IDentifiers (SSIDs).

Multi-hop IP connectivity between the virtual control interfaces (Control 1, Control 2, ... , Control N) may be enabled using IP and any legacy IP routing protocol (see (2) and (3) in Fig. 2). For instance, OLSR as discloses in T. Clausen, P. Jacquet, Optimized Link State Routing Protocol (OLSR), RCF 3626, may be used for providing connectivity over the control traffic interface.

The data interfaces (Data1, Data2, ..., DataN) are preferably connected to the flow forwarding plane (see (5) and (6) in Fig. 2) using for example RAW-sockets. The flow forwarding plane preferably uses local sockets to communicate with the flow control plane (see (7) and (8) in Fig. 2). The flow control plane preferably connects via the control interface and to at least one central network control server, which is preferably located in the core network (see (9) in Fig. 2). Connectivity to outside the mesh is preferably achieved by using one or multiple gateways 10. In addition, a monitoring agent (see (10) in Fig. 2) may reside on each mesh node. This monitoring agent preferably provides a technology independent interface to query monitoring information about link quality and/or channel utilization etc. from the physical interfaces (PHY1, ... , PHYN) and the flow processing entities (see (6) and (8) in Fig. 2)

The flow-forwarding plane (see (6) in Fig. 2) is preferably abstracted as a flow-table, which contains a set of rules for flow-processing. A rule may comprise a pattern, a processing priority, an expiration time, counters and/or a list of actions. The pattern, for example, specifies which packets belong to a flow and can comprise header values or switch ports. Actions allow manipulating headers and to output the packets to data interfaces or encapsulate and forward them to the network control server using the control interface. For example, all packets of a specific user can be forwarded to a given next hop, while limiting the forwarding data rate.

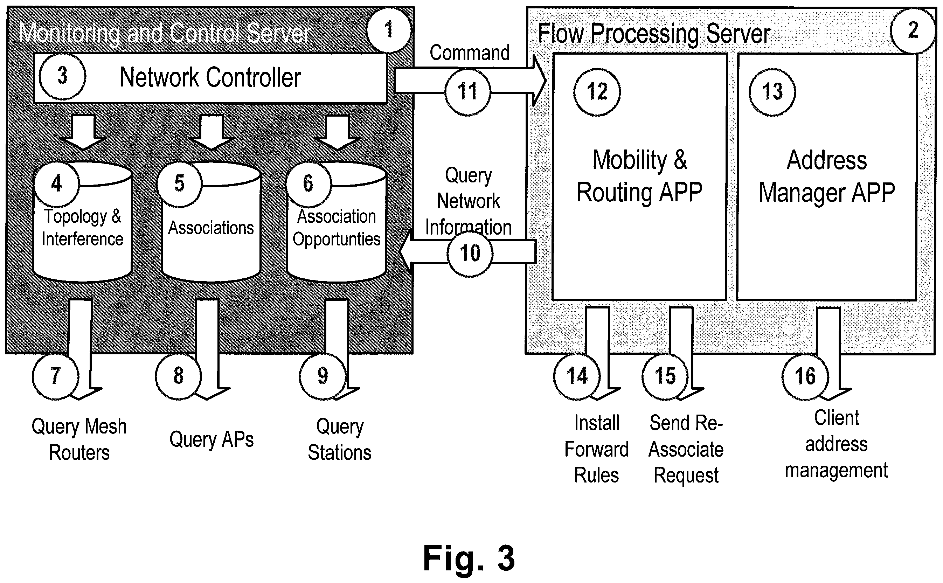

Figure 3 shows an example of a core network architecture according to the present invention. Preferably, the core network comprises a Monitoring and Control Server MCS 31 and/or a Flow Processing Server FPS 32. A network controller may periodically query information from the mesh routers 11 and clients 1, 2 and build a topology, an association and an association opportunity database (see (4) - (6) in Fig. 3).

A topology database (see (4) in Fig. 3) preferably contains a network graph, which is built from the connectivity information of the mesh routing protocol. If a link-state routing protocol such as OLSR is used, all nodes preferably have a view of the whole network. Therefore, the connectivity graph can readily be obtained by retrieving the routing and neighbour table from one of the network gateways (see (7) in Fig. 3). In addition, the network graph can be annotated with link quality metrics, if provided by the routing protocol. Similarly, by querying the mesh routers 11 an interference graph may be built, which contains information about interfering links and network nodes. For example, IEEE 802.11k reports provide information about interfering neighbors or channel load.

An association database (see (5) in Fig. 3) preferably contains a list of stations and the access points, e.g. the MAPs they are associated to.

An association opportunity database (see (6) in Fig. 3) preferably contains a list of stations and the MAPs they can potentially associate to. This database is preferably built from the system statistics of the MAPs and STAs. How to get these statistics will not be further disclosed in this application since appropriate methods are known for a person skilled in the art. The monitoring information can be conveyed using SNMP messages, which are preferably encapsulated into the L2 control protocol (see (8) and (9) in Fig. 3).

Furthermore, the network controller (see (3) in Fig. 3) of the MCS may periodically execute an optimization algorithm, which calculates the optimum routing, flow rates and/or user associations. A preferred embodiment of such an algorithm will be explained in detail below.

One purpose of the FPS is to perform routing and address management related tasks, such as setting forward tables in the mesh routers, handle node mobility and/or manage network addresses. To support those tasks, the FPS preferably can access all relevant databases maintained by the MCS. Preferably, the FPS runs different applications. The type and amount of this applications is preferably depend on the mechanisms used in the network e.g. to control connectivity of STAs to MAPs or to control packet delivery through the network. The mobility and routing APP (see (12) in Fig. 3) preferably configures the path that data takes through the network. The mobility and routing APP preferably connects (see (14) in Fig. 3) low control plane of the mesh router, for example using the OpenFlow protocol as disclose, for example in Casado, M. and Freedman, M.J. and Pettit, J. and Luo, J. and McKeown, N. and Shenker, S., "Ethane: Taking control of the enterprise" In ACM SIGCOMM Computer Communication Review, 37-4, 2007; and N. Gude, T. Koponen, J. Pettit, B. Pfaff, M. Casado, N. McKeown, and S. Shenker, "Nox: towards an operating system for networks," SIGCOMM Comput. Commun. Rev., vol. 38, pp. 105-110, July 2008.

Furthermore, the mobility and routing APP is preferably capable of creating message and output them at any data card of a mesh router. It preferably creates message to inform STA to perform a handover from one MAP to another MAP (see (15) in Fig. 3), for example using the IEEE 802.21 protocol.

The address manager APP (see (13) in Fig. 3) preferably responds to queries from STA (see (16) in Fig. 3). When a STA initially associates to the network and request a layer-3 address, for example using DHCP, the address manager application responds accordingly and also updates the association database. Furthermore, the address manager APP translates to ARP queries.

When the topology database changed (e.g. because of a link failure), the MCS preferably informs the FPS, which then updates the routes based on the new network graph. When a station joins the network, the FPS preferably uses the topology database to calculate a path between the station's MAP and a gateway and then installs flow-rules accordingly.

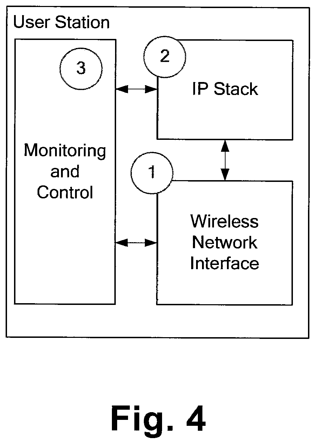

Figure 4 shows a general architecture of a user station STA according to the present invention. For a wireless connection, each user stations (STA) is equipped with at least one wireless interface (see (1) in Fig. 4). Preferably the wireless interface complies to the IEEE 802.11 standard for associating to a MAP and exchanging data. The wireless interface transports layer 3 packets, for example IP packets (see (2) in Fig. 4).

A STA might contain a monitoring and control agent (see (3) in Fig. 4), which preferably allows the MCS and the FPS to query information to build an association opportunity database and to trigger handovers using for example the IEEE 802.21 command set (see Figure 4).

For legacy clients that do not contain monitoring and control agents the MCS and FPS are not able to directly query the required information and can not trigger handovers. For those clients, however, other network mechanisms may be used which are known to a person skilled in the art.

In the following, examples for the optimization algorithm will be discussed in more detail.

The MCS periodically executes an optimization algorithm to control user associations, routing and/or flow rates. The algorithm preferably comprises three phases: pre-processing, algorithm execution, policy enforcement.

### Pre-processing:

The databases in the MCS are read and preferably converted into data structures which form the input to the actual algorithm.

### Algorithm execution:

### Input:

Network Topology Graph (NTG): A NTG is built from the topology and interference database. It includes a node for each mesh node or gateway. A link is made between nodes that can directly communicate with each other. Links are annotated with the maximum achievable rates (given that link is active without contending links). The NTG is constructed using the discovery messages, which are broadcasted periodically by each mesh node. For example the topology discovery mechanism of a legacy routing protocol applied within mesh network can be used. If there is no such mechanism in place, the mesh nodes generate discovery message which are used for NTG construction only. A discovery message includes a serial number and the sender's address. Furthermore, links between mesh gateway nodes and a virtual node "t" are added to the NTG.

Network Contention Graph (NCG): A NCG is built from the topology and interference database and the NTG. Each link in the NGT forms a node in the NCG. Links are made in the NCG, if two links in the NTG interfere with each other when simultaneously used. The NCG is constructed by sending data on one link, while other links remain silent. The end-points of all other links use for example IEEE 802.11k channel load reports to determine, whether the transmission on the currently active link interferes with the endpoint. This procedure is repeated for each link in the network.

User Association Database (UADB): A UADB contains a list of stations and the MAPs they are associated to and is built from the system statistics of the MAPs.

User Association Opportunity Database (UAODB): A UADB contains a list of stations and the MAPs they can potentially associate to.

Fairness Policy: Fairness policy defines how the resources should be split among the users

### Output:

User associations: A list of users stations and which MAPs they should associate to.

Paths: A path is a sequence of links that specifies how the data of one user should be transported. For each user at least one path is generated. Users associated to one mesh router can potentially use different paths.

Rates: Each user gets assigned a data rate that specifies how fast it can download.

The network provider can define different optimization policies, for example to maximize the sum rate in the network or to increase fairness. Below, an exemplary embodiment of the algorithm that maximizes the minimum station rate is described in more detail. The algorithm uses the input parameters listed above and calculates user associations, download rates and/or network paths.
1. **minrate = minrate_old** = 0
2. **alpha = 0%**
3. Find initial STA/MAP matching (e.g. each STA associates to MAP with min-hop count to GW)
4. Calculate max-flow, so that each no two **Xₛ**, **Xₜ** differ by more than **alpha (Xₛ** = **xᵥ**/ (#STA associated at **v**))
5. **minrate** = min (**X₁**, ..., **Xₛ**)
6. **alpha** = **inf**
7. Calculate max-flow, so that each MAP **v** gets at least **minrate** *(#STA associated at **v**)
8. Reshuffle STA between MAP, so that **minrate** increases
9. Calculate max-flow with new matching, ensuring at least **minrate** to each STA
10. If **minrate > minrate**_**old:**
11. **minrate**_**old = minrate**
12. GOTO 3
13. Calculate routes

In line 1-2 minrate, minrate_old and alpha are initialized. "minrate" is the smallest rate that any of the mobile stations (STA) can download with. "alpha" is a relative fairness factor, that states by how many percent the download rates of any two stations can differ at maximum.

In line 3 each station (STA) is (virtually) associated to one mesh access point (MAP) in its reach. This can for example be the MAP that is closest to the next gateway (GW), e.g. the MAP with minimum hop counts to the gateway (GW).

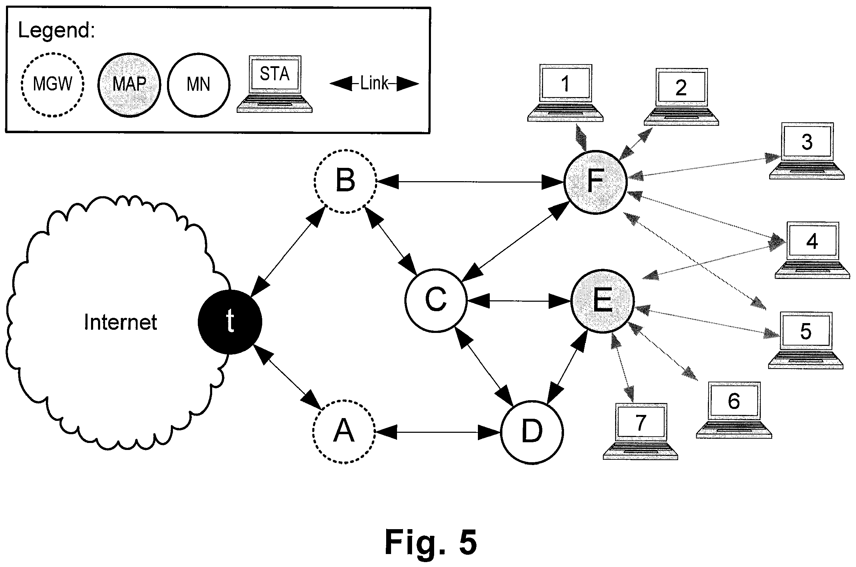

In the example of Figure 5, STA 1-5 are associated to MAP F, while STA 6-7 are associated to MAP E.

In the next step the maximum flow between t (traffic source or gateway) and all MAPs is calculated. This can be done, for example, by solving a linear program or a standard max flow algorithm such as the Ford-Fulkerson algorithm, which is preferably modified to take into account the network contention graph (NCG) and the capacity of the links. The max flow is calculated such that the download rate of each MAP, weighted by the number of associated STA does not differ by more than alpha.

In the example of Figure 5 - based on the network contention graph (NCG) and the link capacities - there are five STAs at F and two STAs at E. The maximum flow rates between t→F and t→E are 5 and 2 Mbit/s, respectively. By setting alpha to 0, an artificial constraint might be imposed as this requires each STA to receive the same download rate. As seen below, flow t→E could get even a higher rate, without harming flow t→F. It is therefore preferable to first step to establish the minimum rate of a STA, which is 1 Mbit/s (the rate of each MAP is divided equally to all associated STA).

In line 6 and 7 the max flow is calculated again. This time no relative fairness is required (alpha is not equal to 0) and STA might receive different download rates, as long as each STA receives at least the minimum rate, which was obtained in line 5. By setting alpha to infinity, the flow rates between t→F and t→E are 5 and 4 Mbit/s, respectively.

In line 8 STAs are reshuffled between the MAPs, so that each reshuffling operation increases the minimum rate. For each pair of MAPs it is checked, one MAP has a STA associated to it, which could associate to the other MAP, and thereby increase the minimum rate.

In the example of Figure 5, STA 5 could associate to both MAP E and F. The associations and download rates are:
MAP F: 5 Mbit/s, STA 1-5, per STA rate: 1 Mbit/s
MAP E: 4 Mbit/s, STA 6-7, per STA rate: 2 Mbit/s

Moving STA 5 from MAP F to MAP E results in the following configuration:
MAP F: 5 Mbit/s, STA 1-4, per STA rate: 1.25 Mbit/s
MAP E: 4 Mbit/s, STA 5-7, per STA rate: 1.33 Mbit/s

The reshuffling step hence increased the minimum flow rates from 1 Mbit/s to 1.25 Mbit/s.

After reshuffling, the flow rates (and in particular, the minimum flow rates) are calculated again in line 9. If minrate has increased, it is saved in the variable minrate_old, and the procedure starts again in line 3, until the minrate does not increase anymore.

After the minrate does not increase anymore, the routes between the STA and t are calculated in line 13. The traffic of one STA might be split to multiple paths. To calculate the routes, one can make use of the fact that t is the only traffic source in the network. Hence, the max-flow calculation will generate a directed acyclic graph with all paths going to t.

For each STA, one can start at the MAP it is associated with and gradually move towards t. If there is more than one incoming link to a node, the traffic is split proportionally to the flow amounts of the links.

For example, MAP F can receive data from the Internet (via gateway t) with a total rate of 5 Mbit/s. The flow on link B-F is 3 Mbit/s, the flow on C-F is 2 Mbit/s. To route the traffic of STA 1 (receives 1.25 Mbit/s download rate), which is associated to MAP F, the traffic needs to be split up at MAP F. The 1.25 Mbits/s are split 3:2, requiring to send 0.75 Mbit/s on link B-F and 0.5 Mbit/s on link C-F. While traversing the graph until reaching t, also the reverse routes, from t to the STA are output.

### Policy enforcement:

The MCS takes the output of the optimization algorithm. It compares it with the current network configuration (routes, rates, user associations) to get a list of required network reconfigurations. A re-configuration can be related to user associations, paths or user rates.

User associations are enforced by sending handover commands to the FPS. The FPS generates a handover message. The handover message includes: user station address, current access point, next access point. The FPS outputs sends this message to the user via the access point the user is currently associated to. For example, IEEE 802.21 provides the functionality of sending such messages to the user station. The Monitoring and Control agent at the user station receives the message and initiates a re-association.

Paths are configured by configuring the flow-tables in the mesh routers.

The method and system according to the present invention is particularly suitable for WMNs and normal WLAN hotspots, since WLAN hotspots are just a special case of WMNs, where all nodes (except for STA) are directly connected to the wired distribution network.

## Claims

1. A method for centralized controlled association of a mobile station (1, 2), STA, to a wireless access point (11, 12), AP, in a wireless multi-hop network (10) with a plurality of wireless access points (11, 12) and at least one gateway (11) to a wired network, the method comprising the steps:
a) gathering information by a monitoring and control server (31) of a central control entity (30) about existing connectivity and/or interference of mobile stations (1, 2) in the wireless network, wherein the central control entity (30) comprises the monitoring and control sever (31) and a flow processing server (32);
b1) deciding by said monitoring and control sever (31) on the basis of the gathered information which mobile station (1, 2) should associate to which wireless access point (11, 12) and
b2) in case the wireless access point is a wireless access point in the multi-hop wireless network, centralized controlled routing data traffic between the associated mobile station (1, 2) to the at least one gateway (11);
c) calculating by the central entity the connectivity and/or interference of the associated mobile stations (1, 2) within the wireless network; and
d) wherein said monitoring and control server (31) calculates how the association of mobile stations and routing of data traffic in the network should be reconfigured and generates a corresponding reconfiguration signal which is transmitted to or requested by the flow processing server (32).

2. The method according to claim 1, wherein the wireless access point (11, 12) is a mesh access point, MAP, or a WLAN hotspot.

3. The method according to claim 1 or 2, wherein additionally to the association of the mobile station (1, 2) to the wireless access point (11, 12) a data rate from said mobile station (1, 2) to said wireless access point is set.

4. The method according to any of the preceding claims, wherein step b2) is based on the gathered information in step a), and data rates between the multi-hops are set.

5. The method according to any of the preceding claims, wherein the flow processing server (32) generates on the basis of the reconfiguration signal
i) a handover signal which is transmitted via the wireless network to the mobile station which then associates to a new wireless access point; and/or
ii) a routing signal which is transmitted to routers in the wireless network in order to route the data traffic through the network.

6. The method according to any of the preceding claims, wherein reconfiguration of the association in step d) is achieved by at least one handover of a mobile station (1, 2) to another wireless access point (11, 12), preferably via a fast handover according to IEEE 802.11r.

7. The method according to any of the preceding claims, wherein calculation for the reconfiguration in step d) is performed either periodically at a interval configurable at the MCS, for example every 30s, or after STA leaves or joins the network as detected by a change in an association database and association opportunity database and after changes in a network topology as detected by a change in a topology database.

8. The method according to any of the preceding claims, wherein calculation for the decision in step b1) is based on an optimization algorithm which comprises at least one of the following input parameters: Network Topology Graph, NTG, Network Contention Graph, NCG, User Association Database, UADB, User Association Opportunity Database, UAODB, and fairness policy.

9. The method according to any of the preceding claims, wherein the wired network is the internet.

10. A system for centralized controlled association of a mobile station (1, 2) to a wireless access point (11, 12) in a wireless multi-hop network (10) with a plurality of wireless access points (11, 12) and at least one gateway (11) to a wired network, the system comprising:
central control entity (30) for gathering information about existing connectivity and/or interference of mobile stations in the wireless network, wherein the central control entity comprises a monitoring and control server (31) and a flow processing server (32);
wherein the central control entity (30) is further adapted to perform the method steps according to any of the preceding claims.

11. The system according to claim 10, wherein the flow processing server (32) is adapted to inform the wireless access points and/or the mobile stations on the basis of the reconfiguration signal received from the monitoring and control server (31).

## Patentansprüche

1. Verfahren zur zentralisierten gesteuerten Verknüpfung einer Mobilstation (1, 2), STA, mit einem drahtlosen Zugangspunkt (11, 12), AP, in einem drahtlosen Multihop-Netzwerk (10) mit mehreren drahtlosen Zugangspunkten (11, 12) und mindestens einem Gateway (11) zu einem drahtgebundenen Netzwerk, wobei das Verfahren die Schritte aufweist:
a) Sammeln von Informationen durch einen Überwachungs- und Steuerserver (31) einer zentralen Steuerentität (30) über eine vorhandene Konnektivität und/oder Interferenz von Mobilstationen (1, 2) im drahtlosen Netzwerk, wobei die zentrale Steuerentität (30) den Überwachungs- und Steuerserver (31) und einen Flussverarbeitungsserver (32) aufweist;
b1) Entscheiden durch den Überwachungs- und Steuerserver (31) auf der Grundlage der gesammelten Informationen, welche Mobilstation (1, 2) mit welchen drahtlosen Zugangspunkt (11, 12) verknüpft werden sollte, und
b2) falls der drahtlose Zugangspunkt ein drahtloser Zugangspunkt im drahtlosen Multihop-Netzwerk ist, zentralisiertes gesteuertes Leiten des Datenverkehrs zwischen der verknüpften Mobilstation (1, 2) zu dem mindestens einen Gateway (11);
c) Berechnen durch die zentrale Entität der Konnektivität und/oder Interferenz der verbundenen Mobilstationen (1, 2) im drahtlosen Netzwerk; und
d) wobei der Überwachungs- und Steuerserver (31) berechnet, wie die Verküpfung der Mobilstationen und das Leiten des Datenverkehrs im Netzwerk neu konfiguriert werden sollte, und ein entsprechendes Neukonfigurationssignal erzeugt, das an den Flussverarbeitungsserver (32) gesendet oder durch ihn angefordert wird.

2. Verfahren nach Anspruch 1, wobei der drahtlose Zugangspunkt (11, 12) eine Mesh-Zugangspunkt, MAP, oder ein WLAN-Hotspot ist.

3. Verfahren nach Anspruch 1 oder 2, wobei zusätzlich zur Verknüpfung der Mobilstation (1, 2) mit dem drahtlosen Zugangspunkt (11, 12) eine Datenrate von der Mobilstation (1, 2) zum drahtlosen Zugangspunkt eingestellt wird.

4. Verfahren nach einem der vorhergehenden Ansprüche, wobei Schritt b2) auf den im Schritt a) gesammelten Informationen beruht und Datenraten zwischen den Multihops eingestellt werden.

5. Verfahren nach einem der vorhergehenden Ansprüche, wobei der Flussverarbeitungsserver (32) auf der Grundlage des Neukonfigurationssignals erzeugt:
i) ein Übergabesignal, das über das drahtlose Netzwerk zur Mobilstation übertragen wird, die dann einen neuen drahtlosen Zugangspunkt verknüpft; und/oder
ii) ein Leitsignal, das an Router im drahtlosen Netzwerk übertragen wird, um den Datenverkehr durch das Netzwerk zu leiten.

6. Verfahren nach einem der vorhergehenden Ansprüche, wobei die Neukonfiguration der Verbindung im Schritt d) durch mindestens eine Übergabe einer Mobilstation (1, 2) an einen anderen drahtlosen Zugangspunkt (11, 12), vorzugsweise über eine schnelle Übergabe gemäß IEEE 802.11r erreicht wird.

7. Verfahren nach einem der vorhergehenden Ansprüche, wobei die Berechnung für die Neukonfiguration im Schritt d) entweder periodisch mit einem an der MCS konfigurierbaren Intervall, zum Beispiel alle 30 s, oder nachdem die STA das Netzwerk verlässt oder ihm beitritt, was durch eine Änderung einer Verknüpfungsdatenbank und Verknüpfungsgelegenheitsdatenbank ermittelt wird, und nach Änderungen einer Netzwerktopologie durchgeführt wird, was durch eine Änderung in einer Topologiedatenbank ermittelt wird.

8. Verfahren nach einem der vorhergehenden Ansprüche, wobei die Berechnung für die Entscheidung im Schritt b1) auf einem Optimierungsalgorithmus beruht, der mindestens einen der folgenden Eingabeparameter aufweist: Netzwerktopologiegraph, NTG, Netzwerkkonkurrenzgraph, NCG, Benutzerverknüpfungsdatenbank, UADB, Benutzerverknüpfungs-Gelegenheitsdatenbank, UAODB, und Fairnessrichtlinie.

9. Verfahren nach einem der vorhergehenden Ansprüche, wobei das drahtgebundene Netzwerk das Internet ist.

10. System zur zentralisierten gesteuerten Verknüpfung einer Mobilstation (1, 2) mit einem drahtlosen Zugangspunkt (11, 12) in einem drahtlosen Multihop-Netzwerk (10) mit mehreren drahtlosen Zugangspunkten (11, 12) und mindestens einem Gateway (11) zu einem drahtgebundenen Netzwerk, wobei das System aufweist:
eine zentrale Steuerentität (30) zum Sammeln von Informationen über eine vorhandene Konnektivität und/oder Interferenz von Mobilstationen im drahtlosen Netzwerk, wobei die zentrale Steuerentität einen Überwachungs- und Steuerserver (31) und eine Flussverarbeitungsserver (32) aufweist;
wobei die zentrale Steuerentität (30) ferner eingerichtet ist, die Verfahrensschritte nach einem der vorhergehenden Ansprüche auszuführen.

11. System nach Anspruch 10, wobei der Flussverarbeitungsserver (32) eingerichtet ist, die drahtlosen Zugangspunkte und/oder die Mobilstationen auf der Grundlage des vom Überwachungs- und Steuerserver (31) empfangenen Neukonfigurationssignals zu informieren.

## Revendications

1. Procédé de commande centralisée de l'association d'une station mobile (1, 2), STA, à un point d'accès sans fil (11, 12), AP, dans un réseau multibonds sans fil (10) comprenant une pluralité de points d'accès sans fil (11, 12) et au moins une passerelle (11) vers un réseau filaire, ledit procédé comprenant les étapes suivantes :
a) collecte par un serveur de surveillance et de commande (31) d'une entité de commande centrale (30) d'informations relatives à une connectivité et/ou une interférence existantes de stations mobiles (1, 2) dans le réseau sans fil, l'entité de commande centrale (30) comprenant le serveur de surveillance et de commande (31) et un serveur de traitement de flux (32) ;
b1) détermination par le serveur de surveillance et de commande (31), sur la base des informations recueillies, de quelle station mobile (1, 2) est à associer à quel point d'accès sans fil (11, 12), et
b2) dans le cas où le point d'accès sans fil est un point d'accès sans fil du réseau multibonds sans fil, commande centralisée d'un routage de trafic de données entre la station mobile (1, 2) associée et ladite au moins une passerelle (11) ;
c) calcul par l'entité centrale de la connectivité et/ou de l'interférence des stations mobiles associées (1, 2) à l'intérieur du réseau sans fil ; et
d) le serveur de surveillance et de commande (31) calculant comment reconfigurer l'association de stations mobiles et le routage de trafic de données dans le réseau, et générant un signal de reconfiguration correspondant transmis au serveur de traitement de flux (32) ou appelé par celui-ci.

2. Procédé selon la revendication 1, où le point d'accès sans fil (11, 12) est un point d'accès maillé, MAP, ou un point d'accès WLAN.

3. Procédé selon la revendication 1 ou la revendication 2, où en plus de l'association de la station mobile (1, 2) au point d'accès sans fil (11, 12), un débit de données est fixé de la station mobile (1, 2) au point d'accès sans fil.

4. Procédé selon l'une des revendications précédentes, où l'étape b2) est basée sur les informations recueillies lors de l'étape a), et où sont fixés les débits de données entre les multibonds.

5. Procédé selon l'une des revendications précédentes, où le serveur de traitement de flux (32) génère sur la base du signal de reconfiguration
i) un signal de transfert transmis via le réseau sans fil à la station mobile, laquelle est ensuite associée à un nouveau point d'accès sans fil ; et/ou
ii) un signal de routage transmis à des routeurs dans le réseau sans fil afin de router le trafic de données via le réseau.

6. Procédé selon l'une des revendications précédentes, où la reconfiguration de l'association lors de l'étape d) est obtenue par au moins un transfert d'une station mobile (1, 2) à un autre point d'accès sans fil (11, 12), préférentiellement via un transfert rapide conformément à IEEE 802.11r.

7. Procédé selon l'une des revendications précédentes, où le calcul pour la reconfiguration lors de l'étape d) est effectué périodiquement à intervalle configurable sur le MCS, toutes les 30 s par exemple, ou après arrivée de la STA dans le réseau ou départ de celui-ci, comme détecté par une variation dans une base de données d'association et une base de données de possibilités d'association, et après changement dans une topologie de réseau, comme détecté par une variation dans une base de données de topologie.

8. Procédé selon l'une des revendications précédentes, où le calcul pour la détermination lors de l'étape b1) est basé sur un algorithme d'optimisation comprenant au moins un des paramètres d'entrée suivants : graphe de topologie de réseau, NTG, graphe de contention de réseau, NCG, base de données d'association d'utilisateurs, UADB, base de données de possibilités d'association d'utilisateurs, UAODB, et politique d'équité.

9. Procédé selon l'une des revendications précédentes, où le réseau filaire est l'Internet.

10. Système pour la commande centralisée de l'association d'une station mobile (1, 2) à un point d'accès sans fil (11, 12) dans un réseau multibonds sans fil (10) comprenant une pluralité de points d'accès sans fil (11, 12) et au moins une passerelle (11) vers un réseau filaire, ledit système comprenant :
une entité de commande centrale (30) pour la collecte d'informations relatives à une connectivité et/ou une interférence existantes de stations mobiles dans le réseau sans fil,
ladite entité de commande centrale comprenant un serveur de surveillance et de commande (31) et un serveur de traitement de flux (32) ;
l'entité de commande centrale (30) étant en outre prévue pour exécuter les étapes du procédé selon l'une des revendications précédentes.

11. Système selon la revendication 10, où le serveur de traitement de flux (32) est prévu pour informer les points d'accès sans fil et/ou les stations mobiles sur la base du signal de reconfiguration reçu du serveur de surveillance et de commande (31).
